Europäisches Patentamt

(19) European Patent Office

Office européen des brevets

(11) Numéro de publication: **0 253 706**
**B1**

(12) **FASCICULE DE BREVET EUROPEEN**

(45) Date de publication du fascicule du brevet:
29.08.90

(21) Numéro de dépôt: **87401477.2**

(22) Date de dépôt: **26.06.87**

(51) Int. Cl.⁵: **F16T 1/24**, F16T 1/38, F16K 47/00

(54) Valve de purgeur pour évacuer la phase liquide d'un fluide biphasique.

(30) Priorité: **17.07.86 FR 8610393**
**07.04.87 FR 8704881**

(43) Date de publication de la demande:
**20.01.88 Bulletin 88/3**

(45) Mention de la délivrance du brevet:
**29.08.90 Bulletin 90/35**

(84) Etats contractants désignés:
**AT BE DE ES GB IT LU**

(56) Documents cités:
**FR-A- 726 097**
**GB-A- 631 753**
**GB-A- 911 167**
**US-A- 1 566 238**
**US-A- 2 117 056**

(73) Titulaire: **COMPAGNIE PARISIENNE DE CHAUFFAGE URBAIN, 185 rue de Bercy, F-75012 Paris(FR)**
Titulaire: **ROBINETTERIE INDUSTRIELLE DE SAONE ET LOIRE, Z.A. Demigny, F-71150 Chagny(FR)**

(72) Inventeur: **Provost, Jean-Claude, Hameau du Châtelet Demigny, F-71150 Chagny(FR)**
Inventeur: **Provost, Marcel, Hameau de Masse Corcelles-Les-Arts, F-21190 Meursault(FR)**
Inventeur: **Carpentier, Alain, 36 rue de Picpus Bt.Les Chênes, F-75012 Paris(FR)**

(74) Mandataire: **CABINET BONNET-THIRION, 95 Boulevard Beaumarchais, F-75003 Paris(FR)**

ACTORUM AG

## Description

L'invention a trait à une valve de purgeur, pour évacuer d'un fluide bisphasique sous pression la phase liquide, comprenant un siège fixé dans une paroi d'un volume apte à recueillir la phase liquide avec un orifice conduisant à un espace d'échappement, et un clapet déplaçable entre des positions de fermeture et d'ouverture sur un trajet défini par des moyens de guidage, et apte à obturer l'orifice en position de fermeture, des moyens sensibles au niveau de phase liquide dans le volume pilotant en ouverture le clapet.

L'invention a vu le jour dans le cadre de l'exploitation d'un réseau de distribution de vapeur en chaffage urbain. La distribution s'effectue à une température maximale d'environ 235°C, la pression effective se situant entre 21 et 5 bars, suivant les endroits où les débits sont délivrés. Lorsque les débits sont faibles, ou quand la pression s'élève rapidement dans les canalisations, la vapeur arrive à saturation et des condensats se forment, qu'il est nécessaire d'évacuer pour que la vapeur reste sèche.

On dispose aux points bas des canalisations, et éventuellement à des points intermédiaires de canalisations longues en pente monotone, des réservoirs dits bouteilles de purges, reliés à leur partie inférieure à des purgeurs.

Ces purgeurs sont généralement du type dit à flotteur fermé, et comportent, dans un volume en communication avec la bouteille de purge, un clapet conduisant à un espace d'échappement, généralement conduite de retour des condensats. Le clapet sollicité en fermeture par la pression régnant dans le volume est sollicité en ouverture, par l'intermédiaire d'un levier, par un flotteur. Lorsque les condensats dans le volume atteignent un certain niveau, le flotteur ouvre le clapet, et les condensats sont expulsés vers l'espace d'échappement, jusqu'à ce que, le niveau baissant, le clapet se referme.

Le dispositif est normalement complété par un purgeur thermostatique, capable d'évacuer les gaz incondensables. Tant que le volume contient uniquement des condensats et de la vapeur, il est sensiblement à la température de la vapeur, tout refroidissement se trouvant compensé par condensation de vapeur. Si des incondensables sont mélangés à la vapeur, la température d'équilibre du volume est définie par la température de condensation de la vapeur à sa pression partielle dans le volume. Le purgeur thermostatique est à température plus basse et s'ouvre, jusqu'à ce que les incondensables soient évacués.

Poux en revenir à la valve d'évacuation des condensats, on remarquera qu'elle travaille dans des conditions très dures. Elle est normalement noyée dans des condensats à température supérieure à 200°C, ces condensats étant constitués d'eau pure, donc fortement corrosive, même vaccinée à l'ammoniac, et elle évacue une émulsion d'eau et de vapeur à grande vitesse, et donc fortement érosive, car le laminage des condensats dans l'orifice de valve provoque une revaporisation partielle des condensats. Par ailleurs, quand les débits de vapeur délivrée sont élevés, et que la pression baisse dans le réseau, les condensats dans le volume se revaporisent, et la valve fermée est exposée à la vapeur vive sèche.

Les valves de purgeurs à flotteur fermé sont généralement constituées d'une bille liée à un bras de levier, l'autre bras de ce levier portant le flotteur, et d'un siège avec un orifice circulaire sur lequel vient se placer la bille, un jeu entre la bille et le bras de levier qui la porte autorisant la mise en place correcte de la bille sur l'orifice.

Néanmoins le document US-A 1 566 238 décrit un purgeur à flotteur fermé muni d'une valve équipée d'un clapet qui présente à l'avant un pointeau tronconique et à l'arrière une queue cylindrique qui coulisse dans une douille tubulaire en saillie d'une face plane de siège et coaxiale à l'orifice. On notera que ce document date des années 1920–1925, et qu'il ne semble pas que la disposition décrite se soit imposée dans la technique.

Il est très important que ces valves soient d'une excellente étanchéité en position fermée. En effet une tonne de vapeur a un coût de 60–100 francs, en raison, tant des traitements de l'eau d'alimentation des générateurs de vapeur, que de l'enthalpie de la vapeur (de l'ordre 2,79 gigajoules par tonne). Or les meilleurs purgeurs actuellement disponibles sur le marché accusent des fuites de l'ordre de 3 kg de vapeur par heure ; ceci correspond à environ 7 centimètres cubes par seconde à 10 bars, ou encore 0,8 centimètre cube par seconde de condensats et peut paraître modeste. Mais cela correspond, sur une année, à 26 tonnes de vapeur, c'est-à-dire une perte d'environ 2 000 frances l'an.

Une telle somme est de l'ordre de grandeur du prix du purgeur lui-même.

L'analyse précise des causes de pertes d'étanchéité de valves de purgeurs, travaillant à des températures de l'ordre de 200°C et des pressions atteignant une vingtaine de bars, est très difficile, en raison des difficultés d'observation en service, et des petites dimensions de ces valves. Sur ce dernier point, on observera que, pour limiter à des valuers raisonnables les dimensions générales des purgeurs, on est conduit à utiliser des flotteurs de quelques centaines de centimètres cubes, à l'extrémité de bras de levier d'une vingtaine de centimètres. Pour que le flotteur soit capable de manoeuvrer le clapet plaqué sur l'orifice par la pression qui règne dans le volume du purgeur, le diamètre de l'orifice doit être inférieur à 5 mm et le recul du clapet en position d'ouverture de l'ordre du millimètre.

On peut penser que les causes de l'étanchéité relativement médiocre des valves de purgeur usuelles sont les chocs du clapet sur le siège à la fermeture, en raison de la vitesse d'écoulement des condensats pendant la purge, et l'autocentrage incorrect de la bille clapet dans la périphérie de l'orifice. Notamment si la bille ne se présente pas exactement centrée sur l'orifice à la fermeture, il peut en résulter un matage d'une zone de la périphérie de l'orifice.

L'objectif de l'invention est la réalisation d'une valve de purgeur dont la fuite reste inférieure au dixième environ des fuites des valves courantes, soit inférieure à 0,3 kg/heure de vapeur.

Dans ce but l'invention propose une valve de purgeur pour évacuer d'un liquide biphasique sous pression la phase liquide, comprenant un siège fixé dans une paroi d'un volume apte à recueillir la phase liquide avec un orifice conduisant à un espace d'échappement et un clapet déplaçable entre des positions de fermeture et d'ouverture sur un trajet défini par des moyens de guidage, et présentant un pointeau tronconique apte à obturer l'orifice en position de fermeture, des moyens pilotant en ouverture le clapet, les moyens de guidage étant constitués d'une douille tubulaire en saillie d'une face plane du siège et coaxiale à l'orifice tandis que le clapet comprend une queue apte à coulisser à jeu glissant dans la douille, caractérisée en ce que le clapet comporte, en regard de la face de siège, une tranche plane d'où fait saillie, centré, ledit pointeau, définissant ainsi conjointement avec la douille et le siège une chambre annulaire, celle-ci étant en communication avec le volume par une pluralité d'ajutages qui débouchent dans la périphérie de la chambre au ras de la face plane.

Dans cette disposition, le centrage du clapet dans l'orifice est assuré avec une certaine précision par le guidage de la queue de clapet dans la douille de siège. En outre la forme conique du pointeau favorise un accostage sans choc dans l'orifice à la fermeture. De plus l'avance du pointeau lors de la fermeture est adoucie par l'existence de la chambre annulaire, et la disposition des ajutages qui la mettent en communication avec le volume. En effet les condensats pénètrent, avec une certaine vitesse, au ras de la face du siège, pour être déviés par la tranche plane de queue et s'écouler le long du pointeau. Il en résulte par réaction un effort dynamique sur la tranche de queue, qui vient s'opposer à la pression.

Par ailleurs, les réactions dynamiques de l'écoulement des condensats entre le pointeau et les parois de l'orifice du siège favorisent le centrage du pointeau dans l'orifice, lors de sa course en avant.

Selon une variante avantageuse de l'invention, la came qui termine le second bras du levier de flotteur s'engage dans la gorge pratiquée dans la queue du clapet en ménageant à celui-ci une course de jeu relatif suivant son axe.

Cette disposition confère au clapet une indépendance relative vis-à-vis du flotteur, notamment lors des phases d'ouverture et de fermeture où les déplacements du flotteur peuvent présenter des composantes oscillantes. En outre cette disposition accroît la différence entre les niveaux de liquide correspondant respectivement à la fermeture et à l'ouverture du clapet. Enfin, à la fermeture, le clapet peut prendre sa position librement, avant que la reprise de jeu par la came n'assure un appui forcé du pointeau dans l'ouverture.

De préférence la course de jeu est comprise entre 0,1 et 0,8 millimètre.

En disposition préférée, le jeu est ajustable, notamment grâce à une vis qui prend dans une saillie du premier bras de levier et vient s'appuyer, en position de fermeture, au centre de la partie arrière du clapet, sensiblement axialement.

Des caractéristiques secondaires et les avantages de l'invention ressortiront d'ailleurs de la description qui va suivre à titre d'exemple, en référence aux dessins annexés dans lesquels :

la figure 1 est une représentation d'une purgeur à flotteur fermé de l'état de la technique ;

la figure 2A est une coupe en élévation d'une valve de purgeur selon l'invention ;

la figure 2B est une coupe en plan de la valve de la figure 2A ;

la figure 3A est une coupe en élévation d'un purgeur incorporant une valve selon l'invention ;

la figure 3B est une vue en plan, partiellement coupée, du purgeur de la figure 3A;

la figure 4 est une coupe verticale, analogue à celle de la figure 3B, d'un purgeur incorporant une variante de valve selon l'invention ;

la figure 5 est une coupe verticale de la valve de purgeur représenté figure 4.

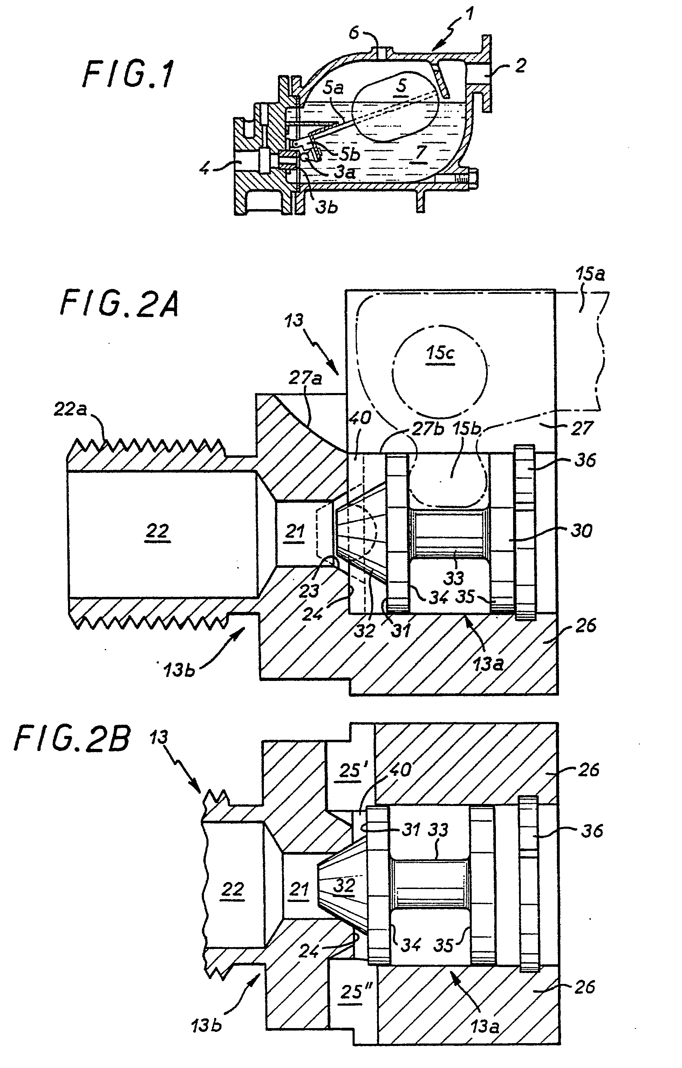

Le purgeur de l'état de la technique représenté figure 1 comporte un volume 1, en communication par la bride 2 avec une bouteille de purge, non représentée. Les condensats d'un réseau de distribution de vapeur sous pression se rassemblent dans cette bouteille de purge, d'où ils passent en 7 dans la partie inférieure du volume 1.

Le purgeur comporte une valve, composée d'un clapet 3a en forme de bille, et d'un siège 3b, situé en dessous du niveau des condensats 7. L'appui de la bille 3a sur la périphérie de l'orifice du siège 3b est commandé par les moyens sensibles au niveau des condensats 7, constitués d'un flotteur 5 à l'extrémité d'un premier bras de levier 5a, tandis que la bille est tenue à l'extrémité d'un second bras de levier 5b, sensiblement perpendiculaire au premier 5a.

Au-delà de la valve 3a, 3b se trouve un conduit 4, qui conduit à un espace d'échappement, cet espace, dans un réseau de distribution de vapeur, étant constitué par les canalisations de retour des condensats au générateur de vapeur.

A la partie haute du volume 1 est situé un orifice 6 de purge d'incondensables ; généralement cet orifice 6 est équipé d'un clapet thermostatique. Tant que l'espace au-dessus des condensats 7 est rempli de vapeur, celle-ci est en équilibre avec les condensats d'une part, et avec le réseau de distribution d'autre part, de sorte que cette vapeur est nécessairement très sensiblement à la température de distribution. Mais si des incondensables, tels que de l'air, viennent à pénétrer dans le volume 1 au-dessus des condensats 7, ils sont susceptibles de se refroidir au contact des parois. Le clapet thermostatique s'ouvre alors, jusqu'à ce que les incondensables soient évacués et que le clapet thermostatique baigne dans la vapeur.

Par ailleurs, on aura compris que, lorsque le niveau des condensats 7 dans le volume 1 atteint une certaine valeur, la poussée hydrostatique sur le flotteur 5 à l'extrémité du bras de levier 5a vient surpasser la poussée due à la pression sur la bille clapet 3a à l'extrémité du second bras de levier 5b. La valve 3a, 3b s'ouvre et les condensats sont expulsés, sous l'effet de la pression qui règne dans le volume 1, par le conduit 4.

On notera que si le clapet 3a est libre de reculer sur une course notable, les différences de poussée de pression entre les parties postérieure et antérieure de la bille 3a deviennent faibles, et le flotteur a tendance à émerger des condensats 7, car la poussée hydrostatique se trouve limitée à la compensation du poids. Les différences de niveau des condensats entre les positions d'ouverture et de fermeture seront notables, ce qui permet d'évacuer une quantité relativement importante de condensats en une opération. La contrepartie est que dans les dernières parties de la course de fermeture de la valve 3a, 3b, la bille 3a sera soumise à des différences de pression élevées entre parties postérieure et antérieure, sans que la poussée hydrostatique sur le flotteur s'oppose à ces différences de pression. La fermeture est donc brutale. Comme la bille 3a doit se centrer d'elle-même sur l'orifice du siège 3b, les chocs de fermeture peuvent provoquer un matage excentré des bords de l'orifice, et la valve perd de son étanchéité.

On remarquera que l'autocentrage de la bille sur l'orifice de siège implique que cette bille 3a soit guidée avec jeu par le bras de levier 5b, de sorte que la présentation de la bille sur son siège est presque nécessairement excentrée.

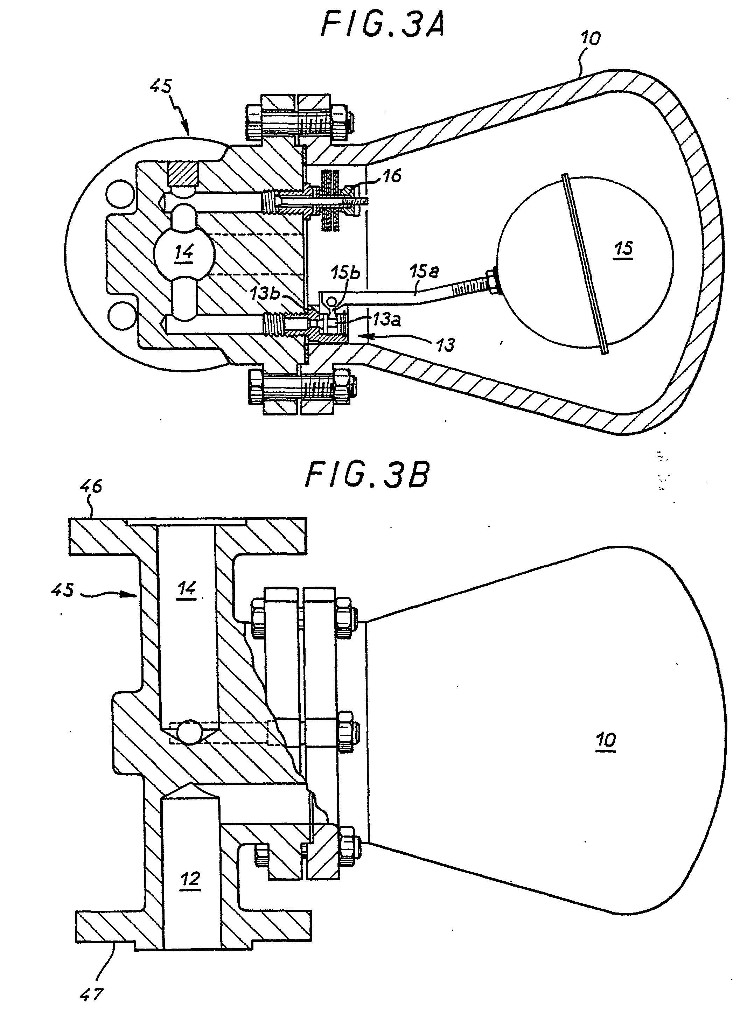

Selon le mode de réalisation de l'invention représenté aux figures 2A et 2B, la valve 13 dans son ensemble, se compose d'un siège 13b et d'un clapet 13a à déplacement rectiligne. Le siège 13b comprend une face plane 24, dans laquelle est usiné un orifice calibré 21 cylindrique qui s'évase en tronc de cône 23 vers le clapet 13a. En arrière de l'orifice 21, le siège continue par un alésage élargi 22, au centre d'un tube fileté 22a par où le siège sera fixé à la paroi du volume du purgeur, comme on le verra mieux en référence à la figure 3A.

De la face plane 24 fait saillie une douille cylindrique 26 dans laquelle peut coulisser le clapet 13a. Cette douille est fendue longitudinalement par une fente fraisée 27, où vient se loger un second bras de levier 15b pivotant autour d'un axe transversal 15c. Perpendiculairement au second bras de levier 15b part un premier bras de levier 15a, à l'extrémité duquel est placé le flotteur 15 (figure 3A).

Le clapet 13a se compose d'une queue 30, susceptible de coulisser glissante dans la douille 26. Cette queue se termine à sa partie antérieure par une tranche plane 31, d'où fait saillie, centré, un pointeau tronconique 32, complémentaire de l'évasement 23 de l'orifice 21 de siège.

Le pointeau 32 garni d'une couche de Stellite, et l'évasement 23 est obtenu par rodage contre le pointeau 32. La queue 30 est creusée d'une gorge 33 limitée latéralement par des faces planes 34 et 35. Comme on le voit figure 2A, le second bras de levier 15b se termine en came arrondie qui porte sur les faces 34 et 35, de façon que le pivotement du levier 15b, 15a autour de l'axe 15c accompagne le déplacement du clapet 13a dans la douille.

La course du clapet 13a est limitée vers l'arrière par butée sur une bague fendue 36 qui est engagée dans une gorge pratiquée dans la douille 26. Bien entendu, cette bague 36 est mise en place, lors du montage de la valve, après que le clapet 13a ait été inséré dans la douille 26.

Comme on le voit aux figures 2A et 2B, la face plane de siège 24, la paroi interne de la douille 26, la tranche plane antérieure 31 de la queue 30, et le pointeau 32 déterminent une chambre annulaire 40.

Cette chambre annulaire 40 est en communication avec le volume 10 de purgeur (voir figure 3A) par trois ajutages. Un premier ajutage 27b est formé par le prolongement de la fente 27 jusqu'à la face plane 24 du siège, qui entaille le siège par une extrémité en arc de cercle 27a. Deux ajutages latéraux 25' et 25" sont pratiqués, perpendiculairement à l'axe de la douille 26. Les axes de ces ajutages sont confondus et horizontaux, coupent l'axe de la douille 26, et sont tangents à la face plane 24 du siège. Les perçages qui réalisent ces ajutages 25' et 25" s'arrêtent légèrement en dépassement de la face cylindrique intérieure de la douille 26 et la pointe des cônes terminaux se situe sur un diamètre supérieur à celui de l'évasement 23.

On constate que les débouchés des ajutages 27b, 25' et 25" dans la chambre annulaire 40 vont déterminer des écoulements d'entrée dans la chambre obliques par rapport à des directions radiales, et dirigés dans la direction de la tranche plane 31 du clapet 13a.

En se reportant aux figures 3A et 3B, dont l'échelle ne permettait pas de faire ressortir la structure de la valve 13, on voit que le volume 10 de purgeur présente une forme de poire, et vient se monter sur une embase 45, munie de brides latérales 46 et 47 pour la liaison respectivement à l'espace d'échappement par le canal 14, et à la bouteille de purge par le canal 12.

Sur l'embase 45 sont montés, outre la valve 13 avec son flotteur de commande 15, un clapet thermostatique 16.

Comme dans la disposition classique de la figure 1, la valve de purgeur est située à la partie inférieure du volume 10 pour être normalement noyée dans les condensats, tandis que le clapet thermostatique 16 est situé à la partie supérieure du volume 10, pour être en état d'évacuer les incondensables vers l'espace d'échappement par le canal 14.

La commande d'ouverture de la valve 13 par le flotteur 15 ne diffère pratiquement pas de la commande d'ouverture évoquée à propos de la figure 1. Mais l'amplitude d'ouverture est limitée par la présence (figures 2A, 2B) de la bague 36, de sorte que le débit d'écoulement des condensats se trouve limité, non seulement par le laminage entre le pointeau 32 et le siège 13b, mais également par le laminage en amont par les ajutages 27b, 25' et 25".

Mais par ailleurs ces ajutages déterminent des jets qui, en raison de leur obliquité définie précédemment, vont être déviés par la tranche plane 31 et le pointeau 32 pour s'écouler par l'orifice 21. La réaction due à cette déviation vient s'opposer à la poussée sur la face postérieure de la queue 30 résultant de la pression dans le volume 10. La fermeture de la valve 13 est donc moins brutale que dans le cas du purgeur de la figure 1.

De plus le déplacement du clapet 13a dans la douille 26 se fait avec un jeu latéral minimum, et le centrage réciproque de l'évasement 23 et du pointeau 32 a été assuré par le rodage, exécuté dans les mêmes conditions de guidage que le coulissement en fermeture du clapet.

Enfin les réactions radiales des jets issus des ajutages 25′ et 25″ sur le clapet 13a se compensent, tandis que la réaction verticale du jet issu de l'ajutage 27b vient compenser la tendance au cabrage du clapet 13a, due à l'appui excentrique de la tête de second levier 15b sur la face 35 de la gorge 33.

On voit que toutes les dispositions structurelles de la valve selon l'invention viennent coopérer pour assurer la reproductibilité de la position relative du clapet par rapport au siège, en position de fermeture de la valve.

Et les essais de prototypes ont montré que les fuites en service restaient inférieures à la limite visée de 0,3 kg/heure de vapeur, sous 20 bars et à la température de saturation correspondante de 215°C.

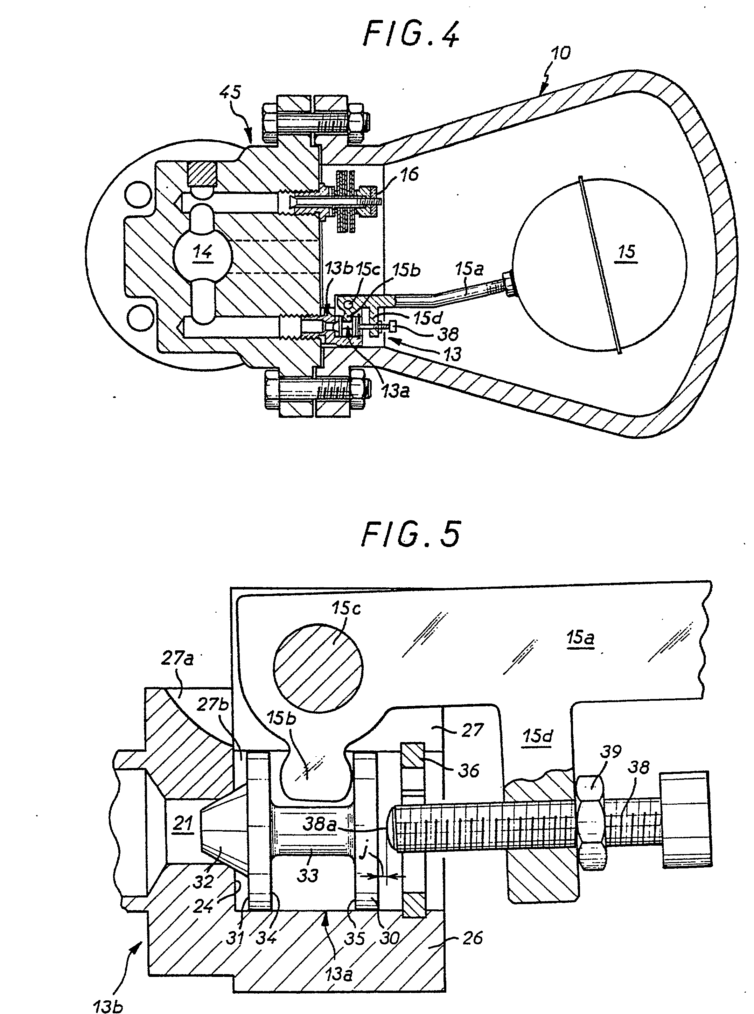

Dans la variante représentée aux figures 4 et 5, et comme on le voit mieux sur cette dernière, le second bras 15b en came pénètre dans la gorge 33, entre les faces 34 et 35, avec un jeu notable, voisin de la moitié de la course possible du clapet 13a, entre sa position de fermeture représentée, et sa position de pleine ouverture où la tranche postérieure de a queue 30 est en butée contre la bague élastique 36.

Le premier bras 15a du levier porte-flotteur comporte une saillie 15d, dirigée vers le bas et dépassant l'axe du clapet 13a. La saillie 15d comporte un trou taraudé dans lequel est engagée une vis de réglage 38, munie d'un contre-écrou de blocage 39. Ce trou est dans l'axe du clapet 13a, lorsque le pointeau 32 est proche de son siège. La partie avant 38a de la vis 38 est arrondie pour porter sur la tranche postérieure de la queue 30 de clapet.

Comme représenté à la figure 5, le clapet 13a est assuré en position de fermeture par l'appui de la vis 38 sur la queue du clapet. Le réglage par rotation de la vis 38 définit un jeu j entre le flanc postérieur du second bras 15b et la face postérieure 35 de la gorge 33.

Dans la pratique le jeu j pourra être de l'ordre de 0,1 à 0,8 mm, pour une course totale du clapet comprise entre 1 et 2 mm. Ce jeu est tel qu'en position de fermeture, la partie avant 38a de la vis 38 prenne appui sur la face postérieure 30 du clapet avant que le second bras 15b prenne appui sur la face antérieure 34 de la gorge 33.

Le jeu j n'intervient pratiquement pas à l'ouverture de la valve 13, lorsque le flotteur 15, sous l'effet de la poussée hydrostatique des condensats dans le volume 10, sollicite en ouverture le clapet 13a, à l'encontre de la pression régnant dans ce volume, par l'appui du flanc postérieur du second bras 15b, formé en came, sur la face postérieure 35 de la gorge 33, l'extrémité 38a de la vis 38 étant déjà nettement écartée de la tranche arrière 30 du clapet.

Lorsque la valve 13 commence à s'ouvrir, l'échappement des condensats, guidés par des ajutages (non représentés ici) pour passer dans le canal 21 après déviation par la tranche antérieure 31 du clapet et le pointeau tronconique 32, a pour effet de développer une contre-pression sur la tranche avant 31 qui compense partiellement la pression des condensats sur la tranche arrière de la queue 30. Le flotteur 15 peut ainsi revenir flotter à la surface des condensats, tandis qu'un effort réduit du second bras 15b du levier de flotteur amène le clapet 13a à sa position de pleine ouverture, par appui de ce second bras 15b sur la face postérieure 35 de la gorge 33.

Au fur et à mesure que les condensats s'échappent par le canal 14, le flotteur 15 descend dans le volume 10, en laissant s'avancer le clapet 13a qui va reprendre sa position de fermeture sous l'effet combiné de la pression statique des condensats sur la tranche arrière de la queue 30 de clapet, la pression dynamique des jets de condensats sur la face antérieure 31 et le pointeau tronconique 32, avec retenue par le second bras 15b de la face postérieure 35 de la gorge 33 de la queue de clapet. Dans cette phase, des oscillations du flotteur 15 à la surface des condensats ne viennent pas, en raison de la présence du jeu du second bras 15b dans la gorge 33, perturber l'appui du clapet 13a sur son siège 13b.

En outre, lorsque le purgeur est fermé, il se produit une baisse de pression dans le réseau de distribution de vapeur, les condensats présents dans le volume 10 vont s'évaporer au moins partiellement, leur niveau pouvant s'abaisser en dessous de celui de la valve de purgeur. On sait que l'étanchéité d'un clapet ou d'un joint est plus difficile à obtenir pour des vapeurs ou des gaz que pour des liquides. Mais ici, lorsque le niveau des condensats s'abaisse en dessous de celui de la valve 13, le poids du flotteur 15 appliqué à l'extrémité du premier bras de levier 15a vient augmenter la poussée de l'extrémité 38a de la vis 38 sur la tranche postérieure de la queue 30 de clapet, avec un effort sensiblement axial, pour parfaire l'étanchéité du pointeau 32 dans le siège 13b.

Notamment la valve a été décrite dans le cadre d'un purgeur à flotteur fermé. Elle serait applicable également à des purgeurs dits à flotteurs ouverts. Ces purgeurs comportent un flotteur en forme de cloche, avec un évent étroit au sommet de la cloche. L'arrivée depuis la bouteille de purge se fait sous la cloche. Tant que de la vapeur arrive sous la cloche, celle-ci flotte sur les condensats et pousse en fermeture une valve, par l'intermédiaire d'un levier. Si des condensats arrivent, la cloche se vide de vapeur par l'évent et coule, ouvrant la valve. Après épuisement de l'arrivée de condensats, la vapeur fait remonter la cloche, et fermer la valve.

La valve de l'invention pourrait par exemple aussi être utilisée pour des séparateurs d'eau et d'huile dans des générateurs d'air comprimé.

Par ailleurs, dans la variante représentée aux figures 4 et 5, on pourrait remplacer la vis 38 par un élément non réglable, même si cette disposition nécessite une précision d'usinage supérieure.

**Revendications**

1. Valve de purgeur pour évacuer d'un fluide biphasique sous pression la phase liquide, comprenant un siège (3b) fixé dans une paroi d'un volume (1) apte à recueillir la phase liquide (7) avec un orifice conduisant à un espace d'échappement (4), et un clapet (3a) déplaçable entre des positions de fermeture et d'ouverture sur un trajet défini par des moyens de guidage (5b) et présentant un pointeau tronconique (32) apte à obturer l'orifice en position de fermeture, des moyens (5, 5a) pilotant en ouverture le clapet (3a), les moyens de guidage étant constitués d'une douille tubulaire (26) en saillie d'une face plane (24) du siège (13b) et coaxiale à l'orifice (21), tandis que le clapet (13a) comprend une queue (30) apte à coulisser à jeu glissant dans la douille (26), caractérisée en ce que le clapet (13a) comporte, en regard de la face (24) de siège (13b) une tranche plane (31) d'où fait saillie un pointeau (32) définissant ainsi, conjointement avec la douille (26) et le siège (13b), une chambre annulaire (40), celle-ci étant en communication avec le volume (10) par une pluralité d'ajutages (27b, 25', 25") qui débouchent dans la périphérie de la chambre (40) au ras de la face plane (24).

2. Valve selon la revendication 1, caractérisée en ce que la douille (26) comporte une butée postérieure (36), définissant la position d'ouverture du clapet (13a).

3. Valve selon l'une des revendications 1 et 2, caractérisée en ce que les moyens sensibles au niveau de la phase liquide (7) sont constitués d'un flotteur fermé (15) à l'extrémité d'un premier bras (15a) d'un levier, dont un second bras (15b) se termine par une came engagée dans une gorge annulaire (33) de la queue (30) de clapet (13a), et passant dans une fente longitudinale (27) pratiquée dans la douille (26) suivant un plan passant par l'axe de cette douille (26).

4. Valve selon la revendication 3, caractérisée en ce que la pluralité d'ajutages comprend d'une part un prolongement (27a, 27b) de la fente longitudinale (27) et d'autre part deux perçages (25', 25") diamétralement alignés sur un axe perpendiculaire au plan de la fente (27) et tangent à la face plane (24) du siège (13b), ces perçages s'étendant de l'extérieur de la douille (26) vers l'intérieur, tout en s'arrêtant à distance de l'orifice (21).

5. Valve selon l'une des revendications 3 et 4, caractérisée en ce que la came qui termine le second bras (15b) du levier de flotteur (15) s'engage dans la gorge (33) pratiquée dans la queue (30) de clapet (13a) en ménageant à celui-ci une course de jeu (j) relatif suivant son axe.

6. Valve selon la revendication 5, caractérisée en ce que la course de jeu (j) est comprise entre 0,1 et 0,8 millimètre.

7. Valve selon l'une des revendications 5 et 6, caractérisée en ce que le levier (15a, 15b) de flotteur (15) est muni de moyens (15d, 38, 39) propres à ajuster la course de jeu (j).

8. Valve selon la revendication 7, caractérisée en ce que lesdits moyens propres à régler la course de jeu (j) comprennent une vis (38) engagée dans une saillie (15d) du levier (15a, 15b), orientée sensiblement suivant l'axe du clapet (13a), et venant porter par une extrémité (38a) sensiblement au centre de la partie arrière de la queue (30) de clapet.

9. Valve selon l'une quelconque des revendications 3 à 8, pour un purgeur de type dit à flotteur fermé, caractérisée en ce que l'axe de l'orifice (21) étant horizontal, le siège (13b) est situé dans le volume (10) en dessous du niveau auquel le flotteur (15) attaque en ouverture le clapet (13a).

10. Valve selon une quelconque des revendications 1 à 9, caractérisée en ce que le pointeau (32) est garni d'une couche de "Stellite".

11. Valve selon une quelconque des revendications 1 à 10, caractérisée en ce que le pointeau (32) et l'orifice (23) sont ajustés l'un sur l'autre par rodage.

**Patentansprüche**

1. Ablaßventil zum Entleeren der Flüssigphase eines unter Druck stehenden zweiphasigen Mediums, mit einem Ventilsitz (3b) der an einer Wandung einer Kammer (10) befestigt ist, die zum Auffangen der Flüssigphase (7) dient und eine in einen Auslaßraum (4) führende Öffnung aufweist, und mit einer Ventilklappe (3a), welche längs eines durch Führungsmittel (5b) definierten Weges zwischen einer Schließstellung und einer Offenstellung verschiebbar ist und eine zum Verschliessen der Öffnung in der Schließstellung ausgebildete kegelstumpfartige Nadel (32) aufweist, und mit Mitteln (5, 5a) zum Steuern des Öffnens der Ventilklappe (3a), wobei die Führungsmittel durch eine von einer ebenen Fläche (24) des Ventilsitzes (13b) vorstehenden und mit der Öffnung (21) koaxialen kurzen, Rohransatz (26) gebildet sind, während die Ventilklappe (13a) ein mit Ventilspiel im Rohransatz (26) verschiebbares Endstück (30) aufweist, dadurch gekennzeichnet, daß die Ventilklappe (13a) eine der Fläche (24) des Ventilsitzes (13b) zugewandte Randfläche (31) aufweist, aus welcher die Nadel (32) zentrisch hervorsteht, so daß diese zusammen mit dem Rohransatz (26) und dem Ventilsitz (13b) einen Ringraum (40) bildet, welche mit der Kammer (10) durch mehrere Durchtrittsöffnungen (27b, 25', 25") in Strömungsverbindung steht, deren Ausrundung am Umfang des Ringraums (40) unmittelbar an der ebenen Fläche (24) verläuft.

2. Ventil nach Anspruch 1, dadurch gekennzeichnet, daß der Rohransatz (26) einen hinteren Anschlag (36) aufweist, der die Schließstellung der Ventilklappe (13a) definiert.

3. Ventil nach Anspruch 1 oder 2, dadurch gekennzeichnet, daß die auf den Stand der Flüssigphase (7) ansprechenden Mittel durch einen geschlossenen Schwimmer (15) am Ende eines ersten Arms (15a) eines Hebels gebildet ist, dessen zweiter Arm (15b) mit einer in einen ringförmigen Hals (33) des Endstücks (30) der Ventilklappe (13a) eingreifenden Nocke endigt und der einen im Rohransatz (26) entlang einer dessen Achse schneidenden Ebene eingearbeiteten Längsspalt (27) durchsetzt.

4. Ventil nach Anspruch 3, dadurch gekennzeichnet, daß die mehreren Durchtrittsöffnungen zum einen Teil aus einem Fortsatz (27a, 27b) des Längsspalts (27) und zum anderen Teil aus zwei Bohrungen (25', 25") bestehen, welche diametral entlang einer zur Ebene des Spalts (27) senkrechten Achse verlaufen und die ebene Fläche (24) des Ventilsitzes (13b) tangieren, wobei sich diese Bohrungen von außerhalb des Rohransatzes (26) bis in dessen Inneres erstrecken, wobei jede Bohrung mit Abstand von der Öffnung (21) endigt.

5. Ventil nach Anspruch 3 oder 4, dadurch gekennzeichnet, daß die Nocke, mit welcher der zweite Arm (15b) des Hebels des Schwimmers (15) endigt, in den in das Endstück (30) der Ventilklappe (13a) eingearbeiteten Hals (33) eingreift, wobei die Ventilklappe ein Axialspiel (j) aufweist.

6. Ventil nach Anspruch 5, dadurch gekennzeichnet, daß das Spiel (j) zwischen 0,1 mm und 0,8 mm beträgt.

7. Ventil nach Anspruch 5 oder 6, dadurch gekennzeichnet, daß der Hebel (15a, 15b) des Schwimmers (15) mit Mitteln (15d, 38, 39) ausgestattet ist, mit welchen das Spiel (j) einstellbar ist.

8. Ventil nach Anspruch 7, dadurch gekennzeichnet, daß die Mittel zum Einstellen des Spiels (j) durch eine in einen Ansatz (15d) des Hebels (15a, 15b) eingreifende Schraube (38) gebildet sind, die etwa in Richtung der Achse der Ventilklappe (13a) orientiert ist und mit einem Ende (38a) etwa mittig an der Rückseite des Endstücks (30) der Ventilklappe anliegt.

9. Ventil nach einem der Ansprüche 3 bis 8 für eine Wasserabscheiderbauart mit geschlossenem Schwimmer, dadurch gekennzeichnet, daß die Achse der Öffnung (21) horizontal verläuft, der Ventilsitz (13b) unten an der Kammer (10) unterhalb der die Öffnung der Ventilklappe (13a) bewirkenden Schwimmers (15) angeordnet ist.

10. Ventil nach einem der Ansprüche 1 bis 9, dadurch gekennzeichnet, daß die Nadel (32) mit einer Stellitschicht versehen ist.

11. Ventil nach einem der Ansprüche 1 bis 10, dadurch gekennzeichnet, daß die Nadel (32) und die Öffnung (23) durch Einschleifen zueinander ausgerichtet sind.

**Claims**

1. Separating valve for discharging the liquid phase of a pressurized two-phase fluid, comprising a seating (3b) fixed in a wall of a chamber (1) suitable for receiving the liquid phase (7), with a port leading to an exhaust space (4) and a valve member (3a) displaceable between closing and opening positions along a path defined by guide means (5b) and presenting a valve needle (32) of truncated conical shape adapted to block the port in the closing position, means (5, 5a) governing the opening of the valve member (3a), the guide means comprising a tubular sleeve (26) projecting from a flat face (24) of the seating (13b) and coaxial with the port (21) while the valve member (13a) comprises a shank (30) adapted for movement with sliding clearance in the sleeve (26), characterized in that the valve member (13a) comprises, directed toward the face (24) of the seating (13b), a flat plate (31) from which projects, centred, the said valve needle (32), thus defining together with the sleeve (26) and the seating (13b) an annular space (40), which communicates with the chamber (10) by a plurality of passageways (27b, 25', 25") which open into the periphery of the space (40) in line with the flat face (24).

2. Valve according to claim 1, characterized in that the sleeve (26) comprises a rear abutment (36) defining the opening position of the valve member (13a).

3. Valve according to one of claims 1 and 2, characterized in that the means responsive to the level of the liquid phase (7) comprise a closed float (15) at the end of a first arm (15a) of a lever, whose second arm (15b) ends in a cam engaging in an annular neck (33) of the shank (30) of the valve member (13a) and passing through a longitudinal slot (27) formed in the sleeve (26) in a plane passing through the axis of the said sleeve (26).

4. Valve according to claim 3, characterized in that the plurality of passageways comprises on the one hand an extension (27a, 27b) of the longitudinal slot (27) and on the other hand two bores (25', 25") diametrically aligned on an axis perpendicular to the plane of the slot (27) and tangentially oriented with respect to the flat face (24) of the seating (13b), these bores extending from the outside of the sleeve (26) towards the inside, while stopping short at a distance from the port (21).

5. Valve according to one of claims 3 and 4, characterized in that the cam which terminates the second arm (15b) of the lever of the float (15) engages in the neck (33) formed in the shank (30) of the valve member (13a), while allowing the latter a relative free play (j) along its axis.

6. Valve according to claim 5, characterized in that the free play (j) is between 0.1 and 0.8 millimetre.

7. Valve according to one of claims 5 and 6, characterized in that the lever (15a, 15b) of the float (15) is equipped with suitable means (15d, 38, 39) for adjusting the length of the free play (j).

8. Valve according to claim 7, characterized in that the said suitable means for adjusting the length of the free play (j) comprise a screw (38) engaged in an extension (15a) of the lever (15a, 15b), the screw being oriented substantially along the axis of the valve member (132) and reaching with one end (38a) substantially to the centre of the rear part of the shank (30) of the valve member.

9. Valve according to any one of claims 3 to 8 for a separator of the so-called "closed float" type, characterized in that, while the axis of the port (21) is horizontal, the seating (13b) is situated within the chamber (10) below the level at which the float (15) acts to open the valve member (13a).

10. Valve according to any one of claims 1 to 9, characterized in that the needle (32) is coated with a layer of "Stellite".

11. Valve according to any one of claims 1 to 10, characterized in that the needle (32) and the port (23) are ground in against each other.

FIG.1

FIG.2A

FIG.2B

## FIG.3A

## FIG.3B

## FIG. 4

## FIG. 5